# EUROPEAN PATENT APPLICATION

(11) **EP 3 626 762 A2**
(43) Date of publication of application: **25.03.2020**
(21) Application number: 18803076.1
(22) Date of filing: 24.04.2018
(51) Int. Cl.: C08G 77/18, C08K 5/541, C08L 83/06

(54) **OPTICAL TRANSPARENT RESIN AND ELECTRONIC ELEMENT FORMED USING SAME**

(30) Priority: 16.05.2017 KR 20170060421
(71) Applicant: Momentive Performance Materials Korea Co., Ltd., Seoul 08510 (KR)
(72) Inventor: PARK, Hyunjin, Seoul 08323 (KR); LEE, Sangjae, Goyang-si Gyeonggi-do 10463 (KR); KIM, Cheonki, Seoul 02780 (KR)
(74) Representative: Goddar, Heinz J.
(86) International application number: PCT/KR2018/004720
(87) International publication number: WO 2018/212475

(57) **Abstract**

The present invention relates to an optical clear resin comprising: 1) the polyorganosiloxane resin represented by Chemical Formula 1; and 2) one or more photoinitiators, in which a refractive index of the optical clear resin is 1.41 to 1.55, and an electronic element formed by using the same.

## Description

### [Technical Field]

This application claims priority to and the benefit of Korean Patent Application No. 10-2017-0060421 filed in the Korean Intellectual Property Office on May 16, 2017, the entire contents of which are incorporated herein by reference.

The present invention relates to an optical clear resin and an electronic element formed by using the same.

### [Background Art]

Recently, flat panel-type image display devices such as liquid crystal, plasma, and organic ELs have drawn attention. Typically, at least one side of the flat panel-type image display device has a display region (image display unit) in which a semiconductor layer or a phosphor layer constituting an active element, or a plurality of pixels formed of a light emitting layer is disposed in the form of a matrix between a pair of substrates having optical transparency such as glass. In general, the peripheries of the display region (image display unit) and a protective unit formed of optical plastic such as glass or an acrylic resin are hermetically encapsulated by a bonding agent.

In the image display device, in order to prevent deterioration in visibility caused by the reflection of outdoor light or indoor illumination, a thin image display device with a resin composition interposed between a protective unit and an image display unit is manufactured, and a thermosetting or UV curable resin is used as a curable resin composition used herein.

Further, a touch system has been considered as one of the important input systems in the modern society, and accordingly, a touch screen panel (TSP) has gradually expanded the region thereof. Starting with the advent of iPhone adopting a capacitive touch system in 2007, the demand for TSP has rapidly increasing due to the growth momentum of smart phones and tablet PCs, and it is expected that examples of adopting a TSP as an input device of various apparatuses required in schools, offices, and households, which exceed the existing electronic apparatus fields ranging from not only laptop computers, all-in-one PCs, and general monitors, but also electrical appliances such as TVs, refrigerators, and washing machines, and vehicles, will be gradually increased. There are various types of TSPs according to the drying system, but since most of the personal electronic apparatuses with the greatest demand currently adopts the capacitive touch system, an optical bonding material having physical properties required to manufacture a capacitive TSP has been actively studied and developed.

The TSP has a structure in which a transparent electrode and a display module are positioned under a cover window, the structure is a structure using an air gap between the cover window and the electrode in the initial period, but currently, a full lamination system (or a direct bonding system) filled with an optical bonding material tends to be generalized. The optical bonding material used to bond each layer in the fill lamination system structure may be largely divided into an optical clear adhesive (OCA) which is a clear double-sided tape type and an optical clear resin (OCR, LOCA) which is a clear liquid type. Here, the term optical clear means that the transmittance of the material itself is 90% or more, and refers to a very clear state.

Examples of a polymer used as an optical bonding material comprise acrylic, silicone-based, urethane-based polymers, and the like, but an acrylic polymer, which is easily designed while having very good transparency, is capable of being rapidly cured by ultraviolet (UV), and has benefits in terms of economy, has been used the most. Since the silicone-based polymer has excellent heat resistance and the urethane-based material may control physical properties by combining soft segments and hard segments, each has advantages.

The optical bonding material may simply bond each constituent layer, and also has advantages in terms of improving image quality. In a structure having an air gap, light from a backlight unit is reflected by a difference in refractive index between an air layer and a film layer, so that partial light loss occurs, which causes blurred images as a whole, thereby leading to deterioration in image quality.

However, when the air gap is filled with an optical bonding material, the difference in refractive index between the film layer and the bonding material is decreased, so that the light loss from the backlight unit is also reduced, and as a result, a clear and bright image can be expressed, thereby improving visibility. Further, the optical bonding material has an advantage even in vibration resistance and impact resistance due to the gap filling with the bonding material.

For this reason, the market for the optical bonding material is gradually increasing, and research and development regarding the optical bonding material will be needed in the future.

### [Disclosure]

### [Technical Problem]

In the case of manufacturing a thin image display device in which a UV curable resin composition is bonded between the protective unit and the image display unit, at the time of curing a UV curable acrylic resin composition in the related art, deformation occurs on the image display unit due to the internal stress caused by shrinkage, and as a result, display defects and mura occur due to the orientation disorder of a liquid crystal material in some cases and thus have been recently problematic. In addition, when a cured product of an acrylic UV curable resin composition in the related art is exposed to high temperature at the time of being used, the transparency thereof deteriorates and the cured product is yellowed in some cases, so that there is a need for improvement. The present invention has been made in an effort to provide an optical clear resin having advantages in that the optical clear resin is suppressed from being shrunk at the time of curing, is not discolored under long-term aging conditions, and shows a small variation in elastic modulus with a change in temperature, and an electronic element formed by using the same.

### [Technical Solution]

An exemplary embodiment of the present invention provides an optical clear resin comprising:
1) a polyorganosiloxane resin represented by the following Chemical Formula 1; and
2) one or more photoinitiators,
   in which a refractive index of the optical clear resin is 1.41 to 1.55:

   [Chemical Formula 1] (R1SiO_{3/2})ₐ(R2SiO_{3/2})_{b}(R3₂SiO_{2/2})_{c}(R4SiO_{3/2})_{d}(Me₃SiO_{1/2})ₑ

   in Chemical Formula 1,
   R1 to R4 are the same as or different from each other, and are each independently selected from the group consisting of hydrogen, an alkyl group, an alkenyl group, an aryl group, a glycidyl group, an isocyanate group, a hydroxyl group, a carboxyl group, a vinyl group, an acrylate group, a methacrylate group, an epoxide group, a cyclic ether group, a sulfide group, an acetal group, a lactone group, an amide group, an alkylaryl group, an alkylglycidyl group, an alkylisocyanate group, an alkylhydroxyl group, an alkylcarboxyl group, an alkylvinyl group, an alkylacrylate group, an alkylmethacrylate group, an alkyl cyclic ether group, an alkylsulfide group, an alkylacetal group, an alkyl lactone group, and an alkyl amide group, and
   a: b : c : d : e is, as a weight ratio, (0 to 60) : (0 to 60) : (70 to 450) : (0 to 60) : (1 to 20).

Further, another exemplary embodiment of the present invention provides an electronic element formed by using the optical clear resin.

### [Advantageous Effects]

The optical clear resin according to an exemplary embodiment of the present invention comprises the polyorganosiloxane resin represented by Chemical Formula 1 and thus is characterized by excellent durability and excellent light transparency. Further, the optical clear resin according to an exemplary embodiment of the present invention is characterized by having a fast light curing rate as compared to those of silicone materials in the related art.

### [Mode for Invention]

Hereinafter, the present application will be described in detail.

Acrylic polymers in the related art are limited in use for large displays because of mura, and the like due to the deformation in a panel, the orientation disorder of liquid crystal materials, and the like, which are caused by stress when a cured product of a resin is cured and shrunk, but silicone has an effect capable of reducing defects due to the low curing shrinkage rate in addition to excellent long-term reliability of silicone itself.

Thus, the present invention has been made in an effort to provide a UV curable silicone resin composition having advantages in that the UV curable silicone resin composition is suppressed from being shrunk at the time of curing, is not discolored under long-term aging conditions, and shows a small variation in elastic modulus with a change in temperature, and an electronic element formed by using the same.

An optical clear resin according to an exemplary embodiment of the present invention comprises: 1) the polyorganosiloxane resin represented by Chemical Formula 1; and 2) one or more photoinitiators, in which a refractive index of the optical clear resin is 1.41 to 1.55.

In general, a resin in which the number of oxygen atoms bonded to one silicon atom in a silicone-based resin is two refers to a D-type silicone-based resin, a resin in which the number of oxygen atoms bonded to one silicon atom in a silicone-based resin is three refers to a T-type silicone-based resin, a resin in which the number of oxygen atoms bonded to one silicon atom in a silicone-based resin is one refers to an M-type silicone-based resin, and a resin in which the number of oxygen atoms bonded to one silicon atom in a silicone-based resin is four refers to a Q-type silicone-based resin. In the related art, the D-type silicone-based resin or the T-type silicone-based resin has been independently used, or the D-type silicone-based resin and the T-type silicone-based resin have been used by being mixed with each other. However, a silicone-based resin such as Chemical Formula 1 according to the present invention is not a mixture of the D-type silicone-based resin and the T-type silicone-based resin in the related art, but a silicone-based resin which comprises both D-type and T-type in the silicone-based resin, and is a silicone-based resin different from that in the related art.

An exemplary embodiment of the present invention is characterized in that suitable strength of a bonding layer may be obtained and the shrinkage of an optical clear resin may be reduced during a curing process of the optical clear resin, by comprising both D-type and T-type in a silicone resin.

In an exemplary embodiment of the present invention, the (R1SiO_{3/2})ₐ of Chemical Formula 1 is a T-type, and may be derived from the following Chemical Formula 2.

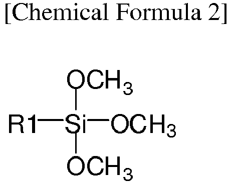

Further, in an exemplary embodiment of the present invention, the (R2SiO_{3/2})_{b} of Chemical Formula 1 is a T-type, and may be derived from the following Chemical Formula 3.

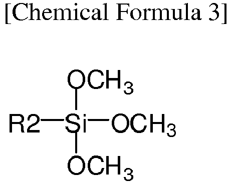

In addition, in an exemplary embodiment of the present invention, the (R3₂SiO_{2/2})_{c} of Chemical Formula 1 is a D-type, and may be derived from the following Chemical Formula 4.

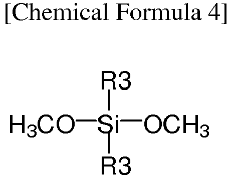

Furthermore, in an exemplary embodiment of the present invention, the (R4SiO_{3/2})_{d} of Chemical Formula 1 is a T-type, and may be derived from the following Chemical Formula 5.

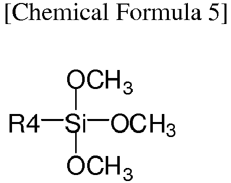

In Chemical Formulae 2 to 5, R1 to R4 are the same as the definitions in Chemical Formula 1.

In an exemplary embodiment of the present invention, R1 and R3 of Chemical Formulae 2 and 4 may be each independently an alkyl group.

The alkyl group may be straight-chained or branched, and the number of carbon atoms thereof is not particularly limited, but is preferably 1 to 30. Specific examples thereof comprise a methyl group, an ethyl group, a propyl group, an n-propyl group, an isopropyl group, a butyl group, an n-butyl group, an isobutyl group, a tert-butyl group, a sec-butyl group, a 1-methyl-butyl group, a 1-ethyl-butyl group, a pentyl group, an n-pentyl group, an isopentyl group, a neopentyl group, a tert-pentyl group, a hexyl group, an n-hexyl group, a 1-methylpentyl group, a 2-methylpentyl group, a 4-methyl-2-pentyl group, a 3,3-dimethylbutyl group, a 2-ethylbutyl group, a heptyl group, an n-heptyl group, a 1-methylhexyl group, a cyclopentylmethyl group, a cyclohexylmethyl group, an octyl group, an n-octyl group, a tert-octyl group, a 1-methylheptyl group, a 2-ethylhexyl group, a 2-propylpentyl group, an n-nonyl group, a 2,2-dimethylheptyl group, a 1-ethyl-propyl group, a 1,1-dimethyl-propyl group, an isohexyl group, a 4-methylhexyl group, a 5-methylhexyl group, and the like, but are not limited thereto.

In an exemplary embodiment of the present invention, R2 of Chemical Formula 3 may be an acrylate group, a methacrylate group, an alkylacrylate group, or an alkylmethacrylate group.

In an exemplary embodiment of the present specification, R4 of Chemical Formula 5 may be an aryl group.

The aryl group may be monocyclic or polycyclic, and the number of carbon atoms thereof is not particularly limited, but is preferably 6 to 30. Specific examples thereof comprise a phenyl group, a biphenyl group, a terphenyl group, a naphthyl group, a triphenylenyl group, an anthracenyl group, a phenanthryl group, a pyrenyl group, a perylenyl group, a chrysenyl group, a fluorenyl group, and the like, but are not limited thereto.

In Chemical Formula 1, a : b : c : d : e is, as a weight ratio, (0 to 60) : (0 to 60) : (70 to 450) : (0 to 60) : (1 to 20), b/(a+b+c+d+e) may range from 0.001 to 0.05, and d/(a+b+c+d+e) may range from 0.05 to 0.5. In terms of obtaining good curability, it is preferred that b/(a+b+c+d+e) ranges from 0.001 to 0.05, and it is more preferred that b/(a+b+c+d+e) ranges from 0.005 to 0.03. Further, in order to reduce light loss due to the interface irregular reflection by minimizing a difference in refractive index of each interface material, it is preferred that d/(a+b+c+d+e) ranges from 0.05 to 0.5. When d/(a+b+c+d+e) exceeds 0.5, mura, and the like may occur due to the deformation in a panel, the orientation disorder of a liquid crystal material, and the like, which are caused by an increase in modulus.

The polyorganosiloxane resin may have a weight average molecular weight of 100 to 1,000,000 or 1,000 to 500,000, but the weight average molecular weight is not limited thereto.

In the present invention, the photoinitiator is thermally inactive, but is excited by being irradiated with light to generate free radicals, and the free radicals impart excitation energy to siloxane, thereby allowing a curing reaction caused by UV curing to begin. Examples of the photoinitiator comprise an aromatic hydrocarbon, acetophenone and derivatives thereof, benzophenone and derivatives thereof, o-benzoylbenzoic acid ester, benzoin, benzoin ether and derivatives thereof, xanthone and derivatives thereof, disulfide compounds, quinone compounds, halogenated hydrocarbons and amines, organic peroxides, and the like from the viewpoint of reactivity, and compounds containing a substituted or unsubstituted benzoyl group or organic peroxides are more preferred from the viewpoint of compatibility with silicon and stability. Examples thereof comprise acetophenone, propiophenone, 2-hydroxy-2-methylpropiophenone, 2,2-dimethoxy-1,2-diphenylethane-1-one, 2-hydroxy-2-methyl-1-phenyl-propan-1-one, 1-hydroxy-cyclohexyl-phenyl-ketone, 1-[4-(2-hydroxyethoxy)-phenyl]-2-hydroxy-2-methyl-1-propan-1-one, 2-hydroxy-1-{4-[4-(2-hydroxy-2-methyl-propionyl)-benzyl]phenyl}-2-methyl-propan-1-one, 2-methyl-1-(4-methylthiophenyl)-2-morpholinopropan-1-one, 2-benzyl-2-dimethylamino-(4-morpholinophenyl)-butanon-1,2-(dimethylamino)-2-[(4-methylphenyl)methyl]-1-[4-(4-morpholinyl)phenyl]-1-butanone, 2,4,6-trimethylbenzoyl-diphenyl-phosphine oxide, bis(2,4,6-trimethylbenzoyl)-phenylphosphine oxide, 1,2-octanedione, 1-[4-(phenylthio)-,2-(O-benzoyloxime)], ethanone, 1-[9-ethyl-6-(2-methylbenzoyl)-9H-carbazol-3-yl]-,1-(O-acetyloxime), oxyphenyl acetic acid, a mixture of 2-[2-oxo-2-phenyl acetoxy ethoxy]ethyl ester, oxyphenyl acetic acid, and 2-(2-hydroxyethoxy)ethyl ester, ethyl-4-dimethylamino benzoate, 2-ethylhexyl-4-dimethylamino benzoate, bis(2,6-dimethoxybenzoyl)-2,4,4-trimethyl-pentyl phosphine oxide, benzoyl peroxide, and the like, but are not limited thereto. In addition, the photoinitiator may be used in the form of a mixture dissolved in a monomer known in the art in terms of compatibility with a resin. Specific examples of the monomer comprise an acrylate-based monomer, a methacrylate-based monomer, a siloxane-based monomer, and the like, but are not limited thereto.

The content of the polyorganosiloxane resin may be 60 wt% to 99 wt% based on the total weight of the optical clear resin, but is not limited thereto.

The content of the photoinitiator mixture may be 1 wt% to 40 wt% based on the total weight of the optical clear resin, but is not limited thereto. When the content of the photoinitiator mixture is less than 1 wt% based on the total weight of the optical clear resin, there may occur a problem in that curing does not proceed even though the optical clear resin is irradiated with strong ultraviolet rays due to a small number of active radicals which promotes the curing, and when the content thereof exceeds 40 wt%, there is concern in that the service life of the electronic element may be shortened because outgassing occurs under the temperature conditions of less than 100°C after the curing.

The optical clear resin according to an exemplary embodiment of the present invention is characterized by having a refractive index of 1.41 to 1.55. The refractive index is a ratio of the velocity of light in the vacuum to the velocity of light in a material, meaning a ratio of an incident angle to a refractive angle of light relative to the material. The optical clear resin is a resin in a middle step of joining a glass or plastic cover, and the like, and when the difference in refractive index between the interfaces is large, light loss due to the reflection at the interfacial portion occurs. Since glass generally applied has a refractive index of 1.5 and PC/PMMA and the like have a refractive index at a level of 1.59, it is necessary to apply a material which does not have a large refractive index with each interface. Since a general methyl-based silicone has a refractive index of 1.4, the refractive index may be adjusted according to the branched R group of the side group. Accordingly, it is important to design an optical clear resin so as to have a level similar to a refractive index of an adhesive interface substrate as a method for minimizing light loss at each interface. Accordingly, the optical clear resin according to an exemplary embodiment of the present invention may have a refractive index of 1.41 to 1.55. When the refractive index exceeds 1.55, the optical clear resin is brittle, so that it is likely to generate cracks and the like during a thermal shock test, and it is also likely to cause a problem with reliability such as an increase in yellowing index caused by heat and light. The refractive index may be measured at 25°C and a wavelength of 590 nm by using an Abbe refractometer.

The optical clear resin according to an exemplary embodiment of the present invention may additionally comprise an adhesion promoter. The adhesion promoter may use a silicone-based compound or silane-based compound comprising at least one hydrolysable functional group such as methoxy and ethoxy. More specifically, the adhesion promoter may use aminoalkoxysilane, a polymeric silane, a polymeric organosilane, an organofunctional silane, vinyl ether urethane silane, glycidoxypropyltrimethoxysilane, (meth)acrylate silane, acryloxypropyltrimethoxysilane, acryloxypropylmethyl-dimethoxysilane, methacrylopropyl-trimethoxysilane, methacrylopropylmethyl-dimethoxysilane, and the like, but is not limited thereto.

The optical clear resin according to an exemplary embodiment of the present invention may comprise the polyorganosiloxane resin represented by Chemical Formula 1, the photoinitiator mixture, and the adhesion promoter. In this case, based on the total weight of the optical clear resin, the content of the polyorganosiloxane resin may be 60 wt% to 95 wt%, the content of the photoinitiator mixture may be 1 wt% to 30 wt%, and the content of the adhesion promoter may be 0.5 wt% to 10 wt%.

The optical clear resin according to an exemplary embodiment of the present invention may additionally comprise a monomer known in the art in order to adjust a curing rate of the silicone resin material. Specific examples of the monomer comprise an acrylate-based monomer, a methacrylate-based monomer, a siloxane-based monomer, and the like, but are not limited thereto.

Examples of the monomer comprise triethylolpropane ethoxy triacrylate, t-butyl (meth)acrylate, 1,5-pentanediol di(meth)acrylate, N,N-diethylaminoethyl (meth)acrylate, ethylene glycol di(meth)acrylate, 1,4-butanediol di(meth)acrylate, diethylene glycol di(meth)acrylate, hexamethylene glycol di(meth)acrylate, 1,3-propanediol di(meth)acrylate, decamethylene glycol di(meth)acrylate, 1,4-cyclohexanediol di(meth)acrylate, 2,2-dimethylolpropane di(meth)acrylate, glycerol di(meth)acrylate, tripropylene glycol di(meth)acrylate, glycerol tri(meth)acrylate, trimethylolpropane tri(meth)acrylate, pentaerythritol tri(meth)acrylate, polyoxyethylated trimethylolpropane tri(meth)acrylate, 2,2-di-(p-hydroxyphenyl)propane diacrylate, pentaerythritol tetra(meth)acrylatelate, 2,2-di-(p-hydroxyphenyl)propane dimethacrylate, triethylene glycol diacrylate, polyoxyethyl-2,2-di-(p-hydroxyphenyl)propane dimethacrylate, di-(3-methacryloxy-2-hydroxypropyl)ether of bisphenol-A, di-(2-methacryloxyethyl)ether of bisphenol-A, di-(3-acryloxy-2-hydroxypropyl)ether of bisphenol-A, di-(2-acryloxyethyl)ether of bisphenol-A, di-(3-methacryloxy-2-hydroxypropyl)ether of 1,4-butanediol, triethylene glycol dimethacrylate, polyoxypropyltrimethylol propane triacrylate, butylene glycol di(meth)acrylate, 1,2,4-butanetriol tri(meth)acrylate, 2,2,4-trimethyl-1,3-pentanediol di(meth)acrylate, 1-phenylethylene-1,2-dimethacrylate, diallyl fumarate, styrene, 1,4-benzenediol dimethacrylate, isobornyl acrylate, 1,4-diisopropenyl benzene, 1,3,5-triisopropenyl benzene, a silicone-based monomer, a silicone acrylate-based monomer, a silicone urethane-based monomer, and the like, but are not limited thereto.

Further, the optical clear resin according to an exemplary embodiment of the present invention may comprise one or one or more of a silicone-based resin series in terms of adjusting the modulus and improving the adhesiveness.

As the silicone-based resin, one or more silicone-based resins (with the proviso that the silicone-based resin does not contain an aliphatic unsaturated group and a mercapto group) selected from the group consisting of MQ resins, MDQ resins, MT resins, MDT resins, MDTQ resins, DQ resins, DTQ resins, and TQ resins are preferred from the viewpoint of adhesiveness and economic feasibility, one or more silicone resin-based adhesion improvers selected from the group consisting of MQ resins, MDQ resins, MDT resins, and MDTQ resins are more preferred from the viewpoint of fluidity and ease of synthesis, and MQ resins are even more preferred in that the intensity of adhesiveness and the structure are easily controlled.

The above-described MQ resins may comprise a silicone-based resin represented by the following Chemical Formula 6.

[Chemical Formula 6] (R5₃SiO_{1/2})ₕ(SiO_{4/2})ᵢ

In Chemical Formula 6,
R5 is each independently a substituted or unsubstituted hydrocarbon,
h + I = 1, and neither h nor I are 0.

In an exemplary embodiment of the present invention, R5 of Chemical Formula 6 may be an alkyl group or an aryl group.

In an exemplary embodiment of the present invention, the content of the silicone-based resin represented by Chemical Formula 6 may be more than 0 wt% and 15 wt% or less based on the total weight of the optical clear resin.

In addition, the optical clear resin according to an exemplary embodiment of the present application may comprise one or more additives such as a stress adjusting agent, a viscosity adjusting agent, a curing agent, a dispersing agent, a stabilizer, and a radical stabilizer depending on the use thereof. These additives may be used either alone or in mixture of two or more thereof.

Furthermore, an electronic element according to an exemplary embodiment of the present invention is characterized by being formed by using the optical clear resin. The optical clear resin according to the present invention has excellent adhesiveness and flexibility, high initial transmittance, and high heat resistant/light resistant transparency and thus may be used particularly suitably for parts associated with optics or parts associated with display devices. More specifically, the optical clear resin according to the present invention may be used for bonding in various flat panel displays such as a liquid crystal panel, and is suitable as a bonding material particularly at the time of manufacturing a large display.

### [Mode for Invention]

Hereinafter, the present specification will be described in more detail through Examples. However, the following Examples are provided only for exemplifying the present specification, but are not intended to limit the present specification.

### <Synthesis Example 1>

Methyltrimethoxysilane (0.147 mol%, CAS# 1185-55-3), phenyltrimethoxysilane (0.076 mol%, CAS# 2996-92-1), methacryloxypropyltrimethoxysilane (0.05 mol%, CAS# 2530-85-0), hexamethyldisiloxane (0.049 mol%, CAS# 107-46-0), and dimethyldimethoxysilane (0.341 mol%, CAS# 1112-39-6) were mixed at room temperature for 30 minutes, and then allowed to react at 120°C for 4 hours in the presence of a catalyst of sulfuric acid (0.001 mol%). Thereafter, the resulting product was washed with a diluted aqueous NaOH solution and neutralized with acetic acid (CAS# 64-19-7), and stripping was performed to obtain final polymer resin A1.

### <Synthesis Example 2>

Polymer resin A2 was obtained in the same manner as in Synthesis Example 1, except that in Synthesis Example 1, 0.10 mol% of methacryloxypropyltrimethoxysilane was applied.

### <Synthesis Example 3>

Polymer resin A3 was obtained in the same manner as in Synthesis Example 1, except that in Synthesis Example 1, 0.15 mol% of methacryloxypropyltrimethoxysilane was applied.

### <Examples>

An optical clear resin according to the present invention was blended and produced by the following process. First, a photoinitiator (PI) mixture was produced by putting bis(2,4,6-trimethylbenzoyl)-phenylphosphineoxide), 2,4,6-trimethylbenzoyl-diphenyl-phosphineoxide, and isobornyl acrylate at a ratio of 9.4 wt% : 15.6 wt% : 75.0 wt% into a 1 L stirrer equipped with a temperature increase / reduced pressure deaeration apparatus in a yellow room where the impurities in the air was managed, stirring the resulting mixture at 50°C for 6 hours, and then filtering the mixture using a membrane filter with a porosity of 2 µm.

The optical clear resin by the present invention was produced by blending the constituent components in the following Table 1. More specifically, a polymer resin and an adhesion promoter were introduced into a 5L universal mixing stirrer equipped with a reduced pressure deaeration apparatus indoors in which the impurities in the air was managed, and the resulting mixture was uniformly mixed at a low speed at room temperature for 30 minutes. Thereafter, the optical clear resin by the present invention was produced by introducing a photoinitiator mixture and various additives into a reactor in a yellow room, uniformly mixing and deaerating the resulting mixture at a low speed for 30 minutes in order to suppress the reaction caused by light, and then filtering the mixture using a membrane filter with a porosity of 10 µm or less, and the like. All the contents in the following Table 1 are wt%.

**[Table 1]**

| | | Example 1 | Example 2 | Example 3 | Example 4 | Comparative Example 1 | Comparative Example 2 | Comparative Example 3 |
|---|---|---|---|---|---|---|---|---|
| Polymer resin | Polymer resin A1 | 93 | 88 | - | - | - | - | - |
| | Polymer resin A2 | - | - | 93 | - | - | - | - |
| | Polymer resin A3 | - | - | - | 93 | - | - | - |
| | Polyorganosiloxane containing a mercapto alkyl group | - | - | - | - | 83 | - | - |
| | Vinyl-end polyorganosiloxane | - | - | - | - | 10 | - | - |
| | Polyorganosiloxane having a methacrylic functional group at both ends | - | - | - | - | - | 93 | - |
| | Polyorganosiloxane having an acrylic functional group at both ends | - | - | - | - | - | - | 93 |
| Adhesion promoter | 3-methacryloxypropyltrietho xysilane | 1.0 | 1.0 | 1.0 | 1.0 | 1.0 | 1.0 | 1.0 |
| | Vinyltrimethoxysilane | 1.0 | 1.0 | 1.0 | 1.0 | 1.0 | 1.0 | 1.0 |
| Photoinitiator mixture | | 3.0 | 3.0 | 3.0 | 3.0 | 3.0 | 3.0 | 3.0 |
| Other additives | Isobornyl acrylate | 2.0 | 2.0 | 2.0 | 2.0 | 2.0 | 2.0 | 2.0 |
| | MQ Silanol Resin | - | 5.0 | - | - | - | - | - |

### <Experimental Examples>

### <Conditions for Evaluating Physical Properties>

Physical properties were evaluated as follows, and the results are shown in the following Table 2.
(1) Refractive index: was measured under a condition of 25°C at a wavelength of 590 nm by using an Abbe refractometer.
(2) Penetration degree: A test specimen was manufactured by irradiation with a predetermined UV ray at 100 mW/cm² using a metal halide lamp, and the hardness of a cured product was measured at 23°C by using a micro penetrometer.
(3) Gel Point: A point where the storage elastic modulus (G') and the loss elastic modulus (G") were crossed with each other was taken as a gelation point by irradiation with UV in a UVA wavelength range using a photo rheometer (omni cure), and the energy was filled in.
(4) Transmittance: was measured by manufacturing a test specimen having a thickness of 180 *µ*m by irradiation with a predetermined UV ray at 100 mW/cm² using a UV-Vis spectrometer manufactured by Shimadzu Corporation and a metal halide lamp, and using the apparatuses.
(5) Curing shrinkage rate: was calculated by measuring the specific weights of the optical clear resin before and after curing and using the difference in specific weight between both sides.
(6) Modulus: A saturated storage elastic modulus (G') value was taken by irradiation with UV in a UVA wavelength range using a photo rheometer (omni cure).
(7) Mura: At the time of performing a panel operation test by actually joining the optical clear resin to a 10-inch display panel, a case where mura did not occur was expressed as OK and a case where mura occurred was expressed as NG.

**[Table 2]**

| | Example 1 | Example 2 | Example 3 | Example 4 | Comparative Example 1 | Comparative Example 2 | Comparative Example 3 |
|---|---|---|---|---|---|---|---|
| Refractive index | 1.42 | 1.42 | 1.44 | 1.50 | 1.43 | 1.43 | 1.48 |
| Penetration degree | 30 | 30 | 25 | 20 | 20 | E5 | E5 |
| Gel Point (mJ/cm²) | 81 | 81 | 108 | 108 | 400 | 750 | 203 |
| Transmittance (400 nm/180 *µ*m) | 99 | 99 | 99 | 99 | 99 | 99 | 99 |
| Curing shrinkage rate (%) | 0.2 | 0.2 | 0.3 | 0.35 | 0.3 | 0.5 | 1.0 |
| Modulus (G', Pa) | 9E+03 | 3E+03 | 2E+04 | 4E+04 | 4E+04 | 1E+05 | 5E+05 |
| Mura | OK | OK | OK | OK | OK | NG | NG |

### <Durability Test>

The durability was evaluated as follows, and the results are shown in the following Table 3.

A glass/glass joined test specimen for a durability test was prepared, the test specimen was left to stand under the following conditions (high temperature (85°C, 500 hrs), high temperature and high humidity (85°C/85%RH, 500 hrs), thermal shock (maintained at-40°C to 85°C for 30 minutes, 500 cycles), and QUV (340 nm, 300 hrs), and then the yellowing index (YI) and a change in appearance were verified. A case where a defect of peeling off/cracks was generated by verifying the change in appearance was described as NG and a case where the reliability defect was not generated was described as OK.

**[Table 3]**

| | | Example 1 | Example 2 | Example 3 | Example 4 | Comparative Example 1 | Comparative Example 2 | Comparative Example 3 |
|---|---|---|---|---|---|---|---|---|
| Yellowing Index (YI) | High Temp. (85°C) | 0.5 | 0.5 | 0.5 | 0.5 | 0.5 | 0.6 | 0.7 |
| | High temp & Humidity (85°C/85%RH) | 0.5 | 0.5 | 0.5 | 0.5 | 0.6 | 0.6 | 0.7 |
| | Thermal shock (-40 ∼ 85°C) | 0.5 | 0.5 | 0.5 | 0.5 | 0.5 | 0.6 | 0.7 |
| | UV resistance (340nm) | 0.5 | 0.5 | 0.6 | 0.7 | 1.0 | 1.0 | 1.0 |
| Appearance | High Temp. (85°C) | OK | OK | OK | OK | OK | OK | OK |
| | High temp & Humidity (85°C/85%RH) | OK | OK | OK | OK | OK | OK | OK |
| | Thermal shock (-40 ∼ 85°C) | OK | OK | OK | OK | OK | NG | NG |
| | UV resistance (340nm) | OK | OK | OK | OK | NG | OK | NG |

It could be confirmed that the optical clear resin according to an exemplary embodiment of the present invention comprised the polyorganosiloxane resin represented by Chemical Formula 1, and as a result, the optical clear resin had a fast photocuring rate and a good light resistance yellowing index as compared to the material of Comparative Example 1 to which the mercapto type was applied. Furthermore, it could be confirmed that the optical clear resin according to an exemplary embodiment of the present invention had a fast photocuring rate and relatively low curing shrinkage rate and modulus as compared to the materials of Comparative Examples 2 and 3 comprising a methacrylate or acrylate reactive group at both ends, and as a result, the optical clear resin had a low yellowing index under long-term aging conditions, and excellent reliability under thermal shock conditions due to a small variation in elastic modulus caused by a change in temperature.

## Claims

1. An optical clear resin comprising:
1) a polyorganosiloxane resin represented by the following Chemical Formula 1; and
2) one or more photoinitiators,
wherein a refractive index of the optical clear resin is 1.41 to 1.55:
[Chemical Formula 1] (R1SiO_{3/2})ₐ(R2SiO_{3/2})_{b}(R3₂SiO_{2/2})_{c}(R4SiO_{3/2})_{d}(Me₃SiO_{1/2})ₑ
in Chemical Formula 1,
R1 to R4 are the same as or different from each other, and are each independently selected from the group consisting of hydrogen, an alkyl group, an alkenyl group, an aryl group, a glycidyl group, an isocyanate group, a hydroxyl group, a carboxyl group, a vinyl group, an acrylate group, a methacrylate group, an epoxide group, a cyclic ether group, a sulfide group, an acetal group, a lactone group, an amide group, an alkylaryl group, an alkylglycidyl group, an alkylisocyanate group, an alkylhydroxyl group, an alkylcarboxyl group, an alkylvinyl group, an alkylacrylate group, an alkylmethacrylate group, an alkyl cyclic ether group, an alkylsulfide group, an alkylacetal group, an alkyl lactone group, and an alkyl amide group, and
a: b : c : d : e is, as a weight ratio, (0 to 60) : (0 to 60) : (70 to 450) : (0 to 60) : (1 to 20).

2. The optical clear resin of claim 1, wherein the (R1SiO_{3/2})ₐ of Chemical Formula 1 is derived from the following Chemical Formula 2: 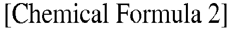 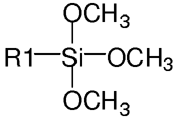 in Chemical Formula 2, R1 is an alkyl group.

3. The optical clear resin of claim 1, wherein the (R2SiO_{3/2})_{b} of Chemical Formula 1 is derived from the following Chemical Formula 3: 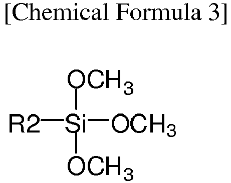 in Chemical Formula 3, R2 is an acrylate group, a methacrylate group, an alkylacrylate group, or an alkylmethacrylate group.

4. The optical clear resin of claim 1, wherein the (R3₂SiO_{2/2})_{c} of Chemical Formula 1 is derived from the following Chemical Formula 4: 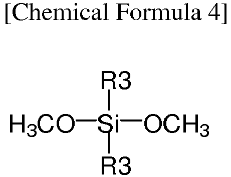 in Chemical Formula 4, R3 is an alkyl group.

5. The optical clear resin of claim 1, wherein the (R4SiO_{3/2})_{d} of Chemical Formula 1 is derived from the following Chemical Formula 5: 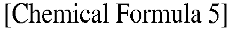 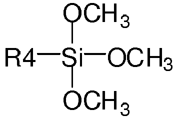 in Chemical Formula 5, R4 is an aryl group.

6. The optical clear resin of claim 1, wherein the one or more photoinitiators are in a form of a photoinitiator mixture dissolved in one or more monomers of an acrylate-based monomer, a methacrylate-based monomer, and a siloxane-based monomer.

7. The optical clear resin of claim 6, further comprising:
an adhesion promoter.

8. The optical clear resin of claim 7, wherein the adhesion promoter is a silicone-based compound or a silane-based compound comprising at least one hydrolysable functional group.

9. The optical clear resin of claim 7, wherein based on a total weight of the optical clear resin, a content of the polyorganosiloxane resin is 60 wt% to 95 wt%, a content of the photoinitiator mixture is 1 wt% to 30 wt%, and a content of the adhesion promoter is 0.5 wt% to 10 wt%.

10. An electronic element formed by using the optical clear resin of any one of claims 1 to 9.
